# EUROPÄISCHE PATENTSCHRIFT

(11) **EP 0 291 775 B1**
(45) Veröffentlichungstag und Bekanntmachung des Hinweises auf die Patenterteilung: **08.12.1993**
(21) Anmeldenummer: 88107237.5
(22) Anmeldetag: 05.05.1988
(51) Int. Cl.: B29C 55/20, B29C 55/12

(54) **Vorrichtung zur simultanen biaxialen Behandlung von Folienbahnen**
Apparatus for the simultaneous biaxial treatment of films
Appareil pour le traitement biaxial simultané de films

(30) Priorität: 18.05.1987 DE 3716603
(43) Veröffentlichungstag der Anmeldung: 23.11.1988
(73) Patentinhaber: LINDAUER DORNIER GESELLSCHAFT M.B.H, D-88131 Lindau (DE)
(72) Erfinder: Langer, Rudolf, D-8990 Lindau/B. (DE)

(56) Entgegenhaltungen:
- DE-C- 3 207 384
- FR-A- 1 318 076
- FR-A- 1 464 892
- FR-A- 1 538 422
- US-A- 2 755 533
- US-A- 3 046 599
- US-A- 3 153 812
- US-A- 3 195 177
- US-A- 3 276 071

## Beschreibung

Die Erfindung betrifft eine Vorrichtung zur simultanen biaxialen Behandlung von Folienbahnen gemäß dem Oberbegriff des Patentanspruchs 1.
Eine solche Behandlung von Folienbahnen wird üblicherweise zum Zwecke einer Folienreckung oder auch im umgekehrtem Sinne für ein gesteuertes Schrumpfen einer Folienbahn durchgeführt, wofür schon eine ganze Reihe von Vorrichtungen von unterschiedlichem Prinzip und Aufbau bekannt geworden sind. Wesentlicher Grundgedanke bei all diesen simultanen Reckvorrichtungen ist dabei die Überlegung, daß der Abstand zwischen zwei von mehreren auf endloser Bahn umlaufenden Spannmitteln für den Folienrand, z.B. der Abstand zwischen zwei aufeinanderfolgenden Spannkluppen während des Betriebes vergrößert und später wieder auf einem Rücklaufweg verringert werden muß. Dabei sind Vorrichtungen bekannt, bei denen die Spannmittel für den Folienrand, z.B. Spannkluppen, zu endlos umlaufenden Kluppenketten zusammengefaßt sind, oder aber Vorrichtungen, bei denen die Spannkluppen einzeln im Verlauf transportiert werden.

Z.B. ist aus der DE-AS 16 29 562 bekannt, daß an jeder Seite einer Folienbahn je zwei endlose Gelenkförderer mit aufeinanderfolgenden Spannmitteln bzw. Greiforganen angeordnet sind. Hierbei sind jeweils die Spannmittel durch Lenker untereinander verbunden, die in zickzack-förmiger Anordnung längs zweier Führungsbahnen in der Reck- und Fixierzone geführt sind. Die beiden Führungsbahnen sind in Längsrichtung in der Reckzone mit zunehmend geringer werdendem Abstand und in der Fixierzone mit zunehmend größer werdendem Abstand zueinander verlegt. Nachteilig und technisch aufwendig ist hierbei, daß eine Änderung des Längsreckverhältnisses oder des Längsschrumpfverhältnisses nur über eine relative Lageveränderung der beiden einander zugeordneten Führungsbahnen zueinander möglich ist.

In der US-PS 3,150,433 ist eine Folienreckmaschine beschrieben, bei der an beiden Rändern einer Folienbahn in endlos umlaufenden Bahnen Spannkluppen verschiebbar angeordnet sind. Dabei sind die Spannkluppen nicht zu einer Kette zusammengefaßt, sondern einzeln transportierbar und greifen in einem sich in Transportrichtung verbreiternden Feld mit einem Zapfen in eine Gewindenut einer rotierenden Welle ein. Durch Rotation der links bzw. rechts der Folienbahn angeordneten Wellen werden die Spannkluppen in Längsrichtung transportiert. Die beiden Wellen laufen in Transportrichtung schräg auseinander und bewirken damit ein Querrecken der Folienbahn. Außerdem sind die Wellen so ausgebildet, daß die Steigung der Gewindenuten in Transportrichtung zunimmt. Dadurch wird während des Transportes der relative Längsabstand zwischen den Kluppen vergrößert und eine Längsreckung der Folie erreicht. Nachteilig bei dieser Anordnung ist, daß das Reckverhältnis für die Längsreckung festliegt und nicht verändert werden kann. Außerdem sind die Wellen sehr aufwendig und nur für eine begrenzte gerade Strecke in der Vorlaufbahn der Kluppen einsetzbar. Eine Möglichkeit für Längsschrumpfung ist in dieser Druckschrift nicht aufgezeigt.

Aus der DE-PS 28 41 510 ist eine Vorrichtung zum Herstellen einer biaxial gereckten Folienbahn bekannt, bei der die einzelnen Spannmittel jeweils durch zugeorndete Verbindungsmittel untereinander verbunden sind und jedes Spannmittel eine Trommel aufweist, auf die bei der Längsreckung zur Änderung des gegenseitigen Abstandes der Spannmittel die jeweiligen Verbindungsmittel ab- und aufspulbar sind. Dabei ist jede Trommel über ein Getriebe mit einem Kettenrad verbunden, das zum Ab- oder Aufspulen der Verbindungsmittel im Eingriff mit entlang der Führungsbahn der Spannmittel angeordneten und von den Spannmitteln unabhängigen Steuerantriebsketten steht. Durch geeigneten Einsatz der Steuerantriebsketten lassen sich Längsreck- und auch Längsschrumpfverhältnisse je nach Erfordernis einstellen. Die mit dieser Anordnung verbundenen Nachteile erstrecken sich insbesondere darauf, daß die gesamte Längskraft durch alle Verbindungsmittel hindurchgeht, was einen erheblichen Getriebeaufwand und größere Abmessungen bedingt. Außerdem werden die Verbindungsmittel durch das Ab- und Aufspulen auf die Trommeln fortwährend gekrümmt, wodurch eine erhöhte Ermüdung des Materials und dadurch ein erhöhter Verschleiß durch Brechen und Abreißen der Verbindungsmittel entsteht. Damit ist u.U. eine Blockierung des Zugorganes bzw. der nebeneinanderliegenden Spannmittel oder Kluppen in den Führungsbahnen verbunden. Außerdem bedingt die Anordnung von je einer Trommel an jedem Spannmittel einen nicht unerheblichen Aufwand an Platz, Material und damit an Gewicht.

Eine Weiterbildung der letztgenannten Art von biaxialen Reckvorrichtungen zeigt die DE-PS 32 07 384. Bei ihr sind die einzelnen Spannkluppen nicht mehr durch besondere auf- und abspulbare Mittel miteinander verbunden, sondern die Spannmittel oder Kluppen werden von einem endlos umlaufenden besonderen Zugoragan getragen und werden von ihm transportiert. Am Spannmittel selbst vorgesehene Zahnräder stehen im Eingriff mit dem Zugorgan und bewirken bei ihrem Verdrehen ein Verschieben des Spannmittels entlang des Zugorganes. Die Zahnräder werden durch dem Spannmittel jeweils zugeordnete und von außen beeinflußbare Antriebseinrichtungen, z.B. durch elektrische Motoren oder durch Getriebe angetrieben. Der gegenseitige Abstand der Spannmittel auf dem Zugorgan ist also von einem unabhängigen und außerhalb des Zugorganes angeorndeten Steuermittel einstellbar. Bei dieser Anordnung werden die Längskräfte nur anteilmäßig auf jedes einzelne Spannmittel abgesetzt und die Hauptkräfte werden über das Zugorgan eingeleitet. Das Zugorgan ist in sich nicht dehnbar und kann daher ohne Schwierigkeiten für die in Folge der Längskräfte auftretenden vollen Belastung ausgelegt werden. Diese bekannte Vorrichtung gestattet ein simultanes biaxiales Recken mit in weiten Grenzen regelbaren Reck- bzw.
Schrumpfverhältnissen, die entlang der Behandlungsstrecke sogar individuell unterschiedliche Werte aufweisen können. Diese bekannte Vorrichtung hat Spannmittel mit Rollenlagerung und erlaubt daher hohe Laufgeschwindigkeiten bei ruhigem und stoßarmen Lauf, erfordert aber einen nicht unbeträchtlichen Aufwand an Steuerungsteilen, Getrieben, Motoren u.s.w., deren Anbau an den Kluppen bzw. entlang der Führungsbahn oft nicht einfach zu bewerkstelligen ist, zumal diese beweglichen Teile in der heißen Umgebung der Behandlungsfelder innerhalb des Gehäuses wirksam sein müssen. Die für die Vorrichtung benötigten und entlang der Führungsbahn angeordneten, mit unterschiedlichen Geschwindigkeiten umlaufenden Steuerketten sind für eine Wartung nur sehr schwer zugänglich.

Bekannt ist aus der US-PS 3,046,599 eine Vorrichtung zum simultanen biaxialen Behandeln von Folienbahnen, mit Klemmteile tragenden Spannmitteln. Die einzelnen Spannmittel sind zu deren horizontalen Führung - in einer oberen und unteren Führungsbahn - mit zueinander achsparallel angeordneten Lauf- oder Führungsrollen ausgerüstet. Auf der der Klemmbacke abgewandten Seite jedes Spannmittels ist an deren vertikaler Begrenzung ein oberer und ein unterer Ansatz vorgesehen. Beide Ansätze sind durch einen Gelenkbolzen miteinander verbunden. Die freien Enden jedes Gelenkbolzens sind ebenfalls mit je einer Laufrolle ausgerüstet. Diese Laufrollen sind in einer weiteren Führung der vorgenannten Führungsbahn horizontal geführt. Die Gesamtheit der unteren und oberen Führungsrollen jedes Spannmittels bildet eine Art Drei-Punkt-Aufnahme, die jedem Spannmittel eine relativ stabile Horizontalführung verleiht.
An dem Gelenkbolzen jedes Spannmittels sind zwei Lenker in Art eines Scherengelenkes angeordnet, deren freie Enden mit dem freien Lenkerende des benachbarten Spannmittels ebenfalls mittels eines Gelenkbolzens verbunden ist, der an seinen freien Enden eine Laufrolle aufnimmt. Aufgrund dessen, daß jedes Spannmittel von der Konzeption her nur mit einem Anlenkpunkt ausgerüstet ist, sind die Gelenkhebel entsprechend lang zu bemessen. Dabei müssen aber Nachteile in der Form in Kauf genommen werden, als die Lenker besonders stabil ausgebildet sein müssen, um die hohen Verstellkräfte während des Reckprozesses auf die Spannmittel übertragen zu können. Augenscheinlich ist auch, daß aufgrund der Lenkerausbildung eine relativ breitbauende Bahnführung im vorderen Umlenkbereich der Kette bis hin zum Einkluppen der Folienbahn erforderlich ist.

Aus der US-PS 3,276,071 ist ebenfalls eine Reckvorrichtung zum simultanen biaxialen Recken von Folienbahnen mittels Gelenkmechanismus bekannt. Hier weisen die einzelnen Spannmittel - abstrahiert betrachtet - zwei achsparallel verlaufende obere und untere Anlenkpunkte für obere und untere Lenker auf. Kettenlaschen oder -glieder, die die einander benachbarten Spannmittel verbinden könnten, sind hier nicht vorhanden. Die Verbindung der Spannmittel untereinander erfolgt vielmehr über zwei relativ langgestreckte Lenker, die zum einen mit dem Spannmittel und zum anderen mit je einem achsparallel beabstandet zu den vorgenannten Anlenkpunkten in einer Führung aufgenommenen Gelenkbolzen verbunden sind. An jedem der Gelenkbolzen greifen daher zwei obere und zwei untere Lenker an. Ein weiterer Hebelmechanismus ist zwischen der Spannmittelführung und der Führung der Gelenkbolzen eingebunden, um das Gelenksystem insgesamt zu stabilisieren.
Die Vorrichtung wird also von kompliziert aufgebauten Gelenkmechanismen mit einer vergleichsweise großen Anzahl von Gelenkstellen gebildet.
Ein enorm hoher technischer und zugleich hoher Wartungsaufwand ist nicht zu verkennen.

Bei der Behandlung von Folienbahnen spielt aber, wie schon erwähnt, nicht nur die Reckung eine Rolle, sondern auch der während des Fixiervorganges auftretenden Schrumpfung kommt Bedeutung zu. Die Abstände zwischen den umlaufenden Spannmitteln müssen bei der Schrumpfung der Folienbahn möglichst genau dem Schumpfmaß angepaßt werden. Daher ist es wichtig, Mittel zur Verfügung zu haben, die eine mehrfache Umlenkung des Kraftverlaufes zur Abstandsveränderung zwischen den Spannmitteln vermeiden.

Ausgehend von biaxialen Reckvorrichtungen der letztgenannten Art mit endlos in Führungsbahnen umlaufenden Spannmitteln mit Rollenlagerung lag der Erfindung die Aufgabe zugrunde, eine Vorrichtung für die simultane biaxiale Behandlung von Folienbahnen zu schaffen, die auf einfache und sichere Weise eine Abstandsänderung zwischen aufeinanderfolgenden Spannmitteln und damit eine Längsreckung, insbesondere aber eine fein gesteuerte Längsschrumpfung ermöglicht.

Erfindungsgemäß sind zur Lösung der gestellten Aufgabe die Merkmale des kennzeichnenden Teils des Patentanspruchs 1 vorgesehen. Vorteilhafte Ausgestaltungen der Erfindung ergeben sich aus den Unteransprüchen und der Beschreibung.

Der Vorteil der erfindungsgemäßen Anordnung liegt darin, daß sie im Aufbau robust ist und keine empfindlichen Teile aufweist. Durch die Anordnung von zwei lose miteinander verbundenen Kettengliedern zwischen den einzelnen Spannkluppen kann durch Einknicken dieser Verbindung der beiden Kettenglieder bzw. durch ein Strecken der Abstand zwischen zwei aufeinanderfolgenden Spannkluppen verändert werden. Das Einknicken bzw. Strecken der Kettenglieder erfolgt durch eine auf den Gelenkbolzen der beiden Kettenglieder drückende Führungsrolle, die von einer entlang der Führungsbahn angeorndeten Steuerschiene gesteuert wird. Diese Anordnung erlaubt es, durch die Ausbildung der Steuerschiene das Verhältnis der Längenveränderungen je nach Bedarf einzustellen.

Es sind dabei in aufeinanderfolgenden mehr oder weniger großen Abschnitten unterschiedliche Werte des Reckverhältnisses, insbesondere aber auch eine feine Dosierung des Schrumpfverhältnisses einstellbar, wobei in dazwischenliegenden Abschnitten eine Unterbrechung des Längsreckvorganges oder auch die Durchführung einer Schrumpfung möglich ist.

Ein Ausführungsbeispiel der Erfindung sei nachstehend anhand der Zeichnung erläutert. Es zeigen:
- Fig. 1: einen Querschnitt durch eine Kluppenkettenbahn und eine Spannkluppe gemäß Schnittlinie A-A in Fig. 2,
- Fig. 2: eine Seitenansicht einer Kluppenkette in stark vereinfachter Form,
- Fig. 3: eine ebenfalls vereinfachte Draufsicht,
- Fig. 4: einen Kettenstrang in gestrecktem Zustand und
- Fig. 5: einen Kettenstrang in verkürztem Zustand.

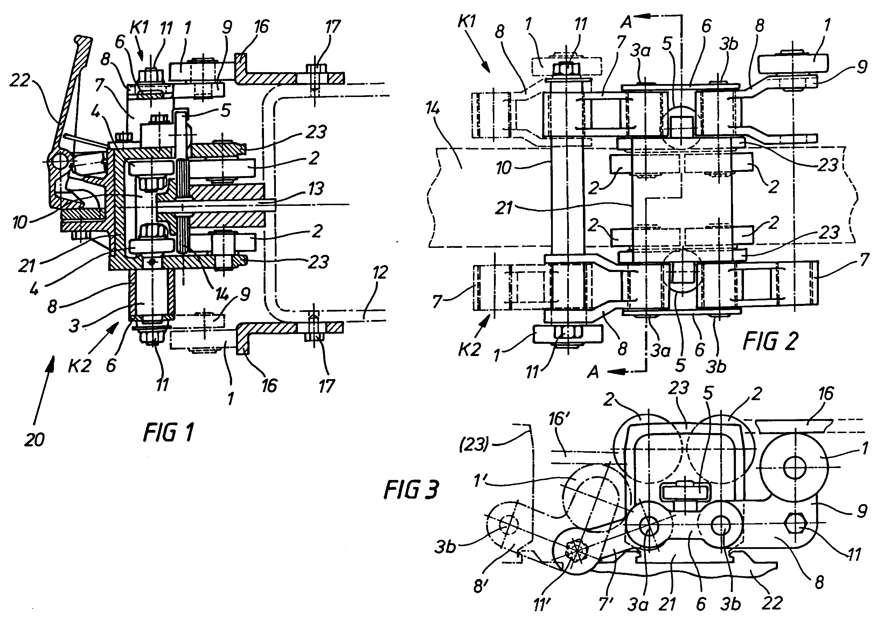

Es sei zunächst der Gesamtaufbau einer erfindungsgemäßen Spannkluppe und ihre Anordnung innerhalb einer Kluppenkette anhand Fig. 1 und 2 beschrieben. Als Spannmittel zum erfassen der Folienbahnränder ist hier eine Spannkluppe 20 mit Rollenlagerung für die Führung der Spannkluppe gewählt. Zur Führung ist eine an sich bekannte Anordnung einer biegsamen Führungsschiene 14 vorgesehen, die in einem Kettenbahnträger 12 durch Befestigungsmittel 13 hochkant angeordnet ist. Der Aufbau von Führungsschienen und Spannkluppe oberhalb und unterhalb der Einspannstelle der Führungsschiene 14 ist im wesentlichen symmetrisch. Die Spannkluppe 20 besteht aus einem vertikal angeordneten Kluppenkörper 21, der oben und unten durch horizontale Platten 23 die Führungsschiene 14 C-artig umgreift.

Auf den Kluppenkörper 21 ist außerdem ein nicht näher beschriebenes Spannteil 22 zum Einspannen der Folienkante abnehmbar aufgesetzt, z.B. über Nuten aufgeschoben (vergleiche Fig. 3). Die Wirkungsweise des Spannteiles 22 ist bekannt und braucht hier nicht weiter beschrieben zu werden.
Vorteilhafterweise ist auch hier die Einspannebene für die Folienbahn in die Symmetrieebene des Kluppenkörpers und der Führungsschiene gelegt.

Die oberen und unteren Platten 23 tragen auf der der Warenbahn abgewandten Seite zwei Rollenpaare 2, von denen jeweils eine Rolle im oberen Teil und die andere Rolle im unteren Teil der Führungsschiene 14 anliegt und an dieser Schiene geführt wird. Diese Laufrollenpaare 2 nehmen die horizontalen Querspannkräfte während der Folienbehandlung auf. Durch den symmetrischen Aufbau erreicht man eine gute Lastverteilung, die für die erfindungsgemäße Veränderung des Kluppenabstandes durch ein Einknicken der die Kluppen verbindenden Kettenglieder wichtig ist. Die hier genannten in horizontaler Laufebene wirkenden Laufrollen 2 sind auf nicht näher beschriebene Weise auf Zapfen oder dergleichen drehbeweglich in den Platten 23 befestigt. Die Platten 23 weisen jeweils einen nicht bezeichneten Durchbruch auf, durch den eine in vertikaler Laufebene wirksam werdende Stützrolle 5 durchgreift und auf der Schmalseite der Führungsschiene 14, die auftretenden Vertikalkräfte der Kette aufnehmend, entlang läuft. Auch in der unteren Platte 23 kann eine entsprechend der Anordnung einer Stützrolle 5 vorgesehen sein. Sie verhindert als Gegenrolle zur oberen Stützrolle ein Abheben der Kluppenkette von der Führungsschiene 14. Auf der der Warenbahn zugewandten Seite der Führungsschiene 14 sind in den Abdeckplatten 23 des Kluppenkörpers 21 zwei weitere Paare von drehbar gelagerten Rollen 4 mit horizontalen Laufebenen vorgesehen. Sie sollen als Gegenrollen zu den Laufrollen 2 ein Abheben der Kluppenkette von der Führungsschiene 14 beim Nachlassen oder Wegfall der horizontalen Spannkräfte vermeiden und außerdem ein Kippen der gesamten Spannkluppe 20 um ihren vertikalen Abstützpunkt an der Stützrolle 5 verhindern. Die Anordnung der Gegenrollen 4 ist analog zur Anordnung der Laufrollen 2, was die Laufeigenschaften entlang der Führungsschiene 14 anbelangt. Jedoch tragen die den Gegenrollen 4 zugeordneten Lagerzapfen auf der Außenseite der Platten 23 einen weiteren Zapfen, der mit 3 bezeichnet ist und als Gelenk zum Anschluß von losen Kettengliedern dient. Diese weiter unten beschriebenen losen Kettenglieder stellen die Verbindung zur nächsten Spannkluppe her.

Aus der vereinfachten Darstellung der Fig. 2 erkennt man aus der Seitenansicht den Kluppenkörper 21, wobei hier der Spannteil 22 weggelassen ist. Am oberen und unteren Ende des Kluppenkörpers 21 sind als Abschluß die horizontalen Platten 23 erkennbar. Von den horizontal angeordneten Rollen sind hier nur die paarweise senkrecht übereinander angeordneten vier horizontalen Laufrollen 2 eingezeichnet. Ihre Gegenrollen 4 sind nicht dargestellt; sie liegen zwischen der vorderen Wand des Kluppenkörpers 21 und den Laufrollen 2 in gleicher horizontaler Anordnung. Die Stützrollen 5 laufen auf der Schmalseite der gestrichelt eingezeichneten Führungsschiene 14 entlang.

Die Fig. 2 zeigt die feste Anordnung von zwei Paaren senkrecht übereinander liegender Gelenkzapfen 3 auf dem Kluppenkörper 21 bzw. dessen oberer und unterer Platte 23. Zur besseren Unterscheidung sind hier, in Zugrichtung bzw. Laufrichtung der Kluppenkette gesehen, die aufeinanderfolgenden Gelenkzapfen mit 3a bzw. 3b bezeichnet. Die beiden Gelenkzapfen 3a und 3b bilden zusammen mit dem Kluppenkörper und einer die beiden Zapfenenden verbindenden Lasche 6 ein starres Kettenglied. Die Gelenkzapfen 3a bzw. 3b dienen als Gelenk für die losen Kettenglieder 7 bzw. 8, wobei die losen Kettenglieder jeweils mit ihrem einen Ende mittels einer Buchse auf den zugeordneten Gelenkzapfen sitzen. Die Anordnung von Gelenkzapfen 3 und der Buchse eines Kettengliedes 8 ist aus der Fig. 1 im unteren Teil zu ersehen.

Dieser Teil der Figur zeigt auch den Abschluß des Zapfen 3 durch eine Kettenlasche 6, welche die Buchse des Kettengliedes 8 auf dem Zapfen 3 festhält.

Das oben erwähnte, durch den Kluppenkörper 21 und die Lasche 6 gebildete starre Kettenglied und die beiden losen Kettenglieder 7 bzw. 8 bilden die aufeinanderfolgenden Kettenglieder von endlos umlaufenden Kettensträngen. Hier im Allsführungsbeispiel sind zwei Kettenstränge, nämlich ein oberer Kettenstrang K1 und ein unterer Kettenstrang K2 vorgesehen. Die an den festen Gelenkzapfen 3a bzw. 3b angeschlossenen losen Kettenglied 7 bzw. 8 bilden jeweils mit einem losen Kettenglied der angrenzenden Spannkluppe ein zweigliedriges gelenkiges Verbindungsglied zwischen zwei aufeinanderfolgenden Spannkluppen. Beide losen Kettenglieder 7 und 8 weisen an ihrem einen Ende eine Buchse zur Lagerung in einem festen Gelenkzapfen 3a bzw. 3b auf. Das Kettenglied 7 ist auch an seinem anderen Ende als Buchse ausgebildet, wobei die beiden Buchsen des Kettengliedes 7 durch zwei Stege mit zwischen ihnen liegender Öffnung zu einem geschlossenen Kettenglied ergänzt sind. Das Kettenglied 8 dagegen enthält zwar ebenfalls zwei von einer Buchse ausgehende Stege mit dazwischenliegendem freien Raum, jedoch sind diese Stege so angeordnet, daß sie die lose angeordnete Buchse eines gegenüberliegenden Kettengliedes 7 an ihren Enden zwischen sich einschließend ein Gelenk bilden. Hierfür ist ein Gelenkbolzen 10 vorgesehen, der vom Kettenstrang K1 zum Kettenstrang K2 durchgehend und die beiden Kettenstränge miteinander in gleicher Weise verbindet, wie der oben erwähnte Kluppenkörper 21. Die Befestigung der beiden Kettenglieder auf dem Gelenkbolzen 10 ist durch Schrauben 11 angedeutet. Auf diese Weise sind alle in einem der Kettenstränge vorkommenden Kettengelenke mit den zugeordneten Gelenken des anderen Kettenstranges starr verbunden. Die Längsabmessungen der losen Kettenglieder 7 bzw. 8 sind alle gleich und entsprechen dem Abstand der beiden fest auf dem Kluppenkörper 21 angeordneten Gelenkzapfen 3a und 3b. Es ergibt sich somit eine gleichmäßige Kettenteilung und die beiden Kettenstränge K1 und K2 können in üblicher Weise über Zahnräder angetrieben werden, die in die oben genannten fensterartigen Öffnungen bzw. Zwischenräume der Kettenglieder eingreifen können. Der Antrieb der Ketten braucht daher nicht weiter beschrieben zu werden. Die Reihenfolge der in Zugrichtung der Kette auf den Kluppenkörper 21 folgenden losen Kettenglieder 7 bzw. 8 kann im oberen Kettenstrang K1 und im unteren Kettenstrang K2 im Prinzip gleich oder umgekehrt sein. In Fig. 2 ist beispielsweise für den unteren Kettenstrang K2 eine umgekehrte Reihenfolge der losen Kettenglieder gewählt.

In der stark vereinfachten Draufsicht der Fig. 3 ist der Kluppenkörper 21 mit seiner oberen Platte 23 erkennbar. Durch einen Durchbruch in der Platte 23 greift die Vertikalrolle 5 hindurch, um auf der Schmalseite der hier nicht dargestellten Kluppenführungsschiene 14 zu laufen. Im unteren Teil der Fig. 3 ist noch angedeutet, wie ein Spannteil 22 durch Aufschieben in Nuten auf den Kluppenkörper 21 befestigt werden kann. Durch die angedeutete Anordnung des Spannteils 22 ist auch die Lage der zu reckenden Folienbahn definiert. Sie liegt wie üblich auf der Seite des Spannteils 22. Zwischen der vertikalen Stützrolle 5 und der der Folienbahn zugewandten Seite des Kluppenkörpers 21 sind die Zapfen 3a und 3b angeordnet, jedoch sind die von ihnen getragenen aber verdeckten Gegenrollen 4 zu den Laufrollen 2 nicht sichtbar. In die nach oben über die Platte 23 vorstehenden Teile des Zapfens 3a ist eine Büchse des losen Kettengliedes 7 und in den zugeordneten Zapfen 3b eine Büchse des losen Kettengliedes 8 eingesetzt. Die beiden eingesetzten Büchsen werden durch eine vom Zapfen 3a zum Zapfen 3b reichende Verbindungslasche 6 abgedeckt, wie in der Fig. 2 noch deutlicher gezeigt wird. Unter einer Befestigungsschraube 11 ist hier, in der Fig. 3 nicht sichtbar, der Gelenkbolzen 10 angeordnet. Der außenliegende Steg des Kettengliedes 8 ist als Winkelhebel ausgebildet und mit einem abgewinkelten Arm 9 versehen, der, von der Befestigungsschraube 11 ausgehend, in die der Warenbahn abgewandte Richtung nach hinten weist und an seinem Ende eine Führungsrolle 1 trägt. Die Führungsrolle 1 ist in einer Horizontalebene drehbar gelagert und legt sich gegen eine Steuerschiene 16 an, von der nur ein kurzes Stück in der Fig. 3 angedeutet ist. Die Fig. 1 veranschaulicht deutlicher den von der Folienbahn wegweisenden Arm 9 mit seiner horizontalen Führungsrolle 1. Diese Ausgestaltung ist in beiden Kettensträngen K1 und K2 vorgesehen. Dort ist auch die Anordnung der Steuerschiene 16 gezeigt, die z.B. an einem Kettenbahnträger 12 einstellbar bzw. in Richtung quer zur Transportrichtung der Folienbahn verschiebbar befestigt ist. Die Befestigung ist hier in vereinfachter Form durch eine Schraube 17 mit Langloch in der Steuerschiene angedeutet.

Im linken Teil der Fig. 3 ist strichpunktiert dargestellt eine verschobene Lage 16' der Steuerschiene 16 eingezeichnet. Infolge dieser verschobenen Steuerschiene wird auch die Führungsrolle in eine verschobene Lage 1' gebracht und dadurch der Winkelhebel des Kettengliedes 8 um den auf der nachfolgenden Spannkluppe sitzenden Zapfen 3b verschwenkt und in die strichpunktiert eingezeichnete Lage 8 gebracht. Die nachfolgende Spannkluppe ist strichpunktiert durch die Umrandung ihrer Platte 23 angedeutet. Durch die Verschwenkung des Kettengliedes 8 gelangt der durch seine Befestigungsschraube 11 angedeutete Gelenkbolzen 10 in eine Stellung 11' und verschwenkt dabei auch die auf ihm gelagerte Buchse des anschließenden Kettengliedes 7 um dessen festen Gelenkzapfen 3a in eine verschwenkte Lage 7'. Durch die abgeknickte Lage der losen Kettenglieder 7' bzw. 8' gegenüber den festen Gelenkstellen der Zapfen 3a der einen und 3b der angrenzenden Spannkluppe wird der Abstand zwischen den letztgenannten Gelenkzapfen 3a und 3b der nachfolgenden Spannkluppe verkürzt. Wegen der Anordnung von zwei Kettensträngen K1 und K2 und wegen ihrer gegenseitigen Verbindung durch die durchgehenden Gelenkbolzen 10 erfolgt das Abknicken der Kettenglieder bzw. die Veränderung des Kluppenabstandes gleichmäßig und ohne ein Verkanten bzw. Verklemmen der Spannkluppen 20 auf ihrer Führungsschiene 14.

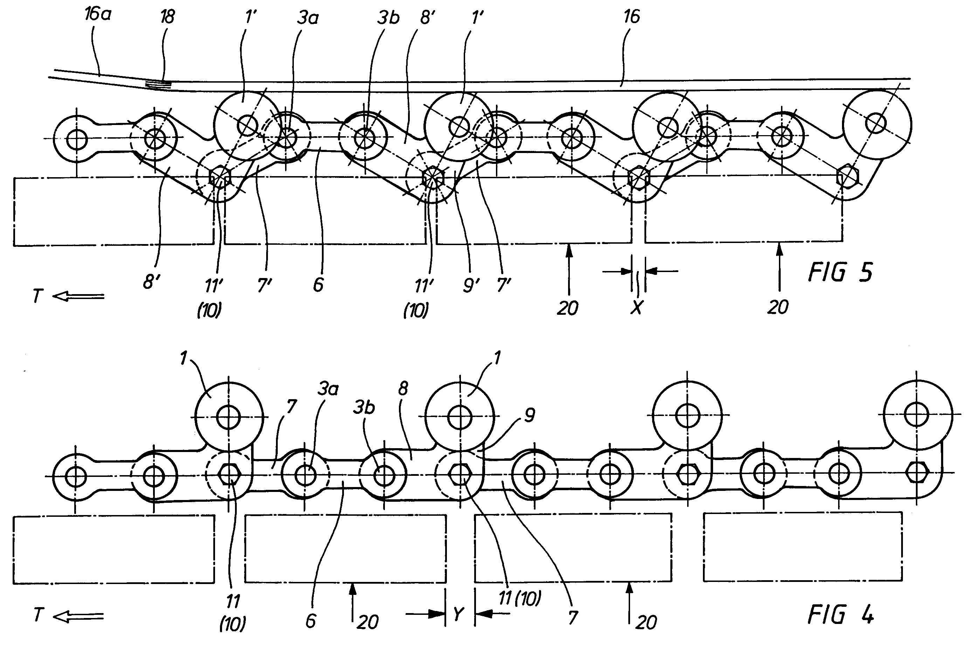

In der Fig. 4 ist schematisch in der Draufsicht ein Kettenstrang für Spannkluppen 20 dargestellt. Die einzelnen Kettenglieder werden durch ein starres - aus der Spannkluppe und einer Lasche 6 gebildetes - Kettenglied und zwei, die Verbindung zur nächsten Spannkluppe herstellende, lose Kettenglieder 7 und 8 gebildet. Nachstehend soll zur Vereinfachung die Lasche 6 das gesamte starre und durch die Spannkluppe 20 selbst gebildete Kettenglied representieren. Die Lage der Spannkluppen 20 ist strichpunktiert dargestellt, wobei die in Fig. 1 gezeigten Führungsschienen 14 für die Spannkluppen 20 hier der Übersichtlichkeit halber weggelassen sind. Durch kurze von den schematisch dargestellten Spannkluppen 20 ausgehende strichpunktierte Geraden soll die feste Anordnung der Gelenkzapfen 3a und 3b an der Spannkluppe 20 angedeutet sein. Die Längen der einzelnen Kettenglieder 6,7 und 8 sind alle gleich und entsprechen dem Abstand der Gelenkzapfen 3a und 3b auf einer Spannkluppe 20. Somit haben alle Gelenkstellen des Kettenstranges, seien sie nun fest wie bei den Zapfen 3a und 3b oder lose wie beim Gelenkbolzen 10 (der hier nicht sichtbar unter der Befestigungsschraube 11 liegt), gleiche Abstände. Dadurch ist ein einfacher Transport der Kette durch Zahnräder in üblicher Weise möglich. Die Transportrichtung ist z.B. durch die Pfeilrichtung "T" angedeutet. In der Fig. 4 ist keine Steuerschiene 16 für die Führungsrolle 1 eingezeichnet, d.h. der Kettenstrang ist durch die Steuereinrichtung unbeeinflußt und kann sich in Längsrichtung maximal strecken, wobei zwischen zwei aufeinanderfolgenden Spannkluppen 20 ein Abstand "y" gebildet wird.

Die Fig. 5 entspricht in der Darstellung der Fig. 4 mit dem Unterschied, daß hier in Fig. 5 eine Steuerschiene 16 vorgesehen ist, an der die Führungsrollen 1 entlanglaufen müssen. Durch den Abstand der Steuerschiene 16 von der festgelegten Bahn der Spannkluppen 20 werden in der oben anhand der Fig. 3 beschriebenen Weise die losen Kettenglieder 7 und 8 in eine abgewinkelte Lage 7' und 8' verschwenkt und dabei ein Einknicken der Kettenglieder mit ihrem Gelenkbolzen 10 (hier angedeutet durch ihre Befestigungsschraube 11) bewirkt. Infolge dieses Einknickens bzw Abwinkelns der losen Kettenglieder ergibt sich eine Verkürzung des Kluppenabstandes auf das Maß "x". Durch die geometrischen Gegebenheiten des Einknickens ist eine feine und genaue Einstellung des Kluppenabstandes möglich. Auf diese Weise kann ein Schrumpfvorgang bei der biaxialen Behandlung von Folienbahn fein dosiert gesteuert werden. Dabei ist der Absolutwert des Schrumpfverhältnisses naturgemäß kleiner als die sonst üblichen Längenreckverhältnisse. Selbstverständlich kann mit der Erfindung umgekehrt auch ein Reckvorgang oder Nachreckvorgang von geringem Ausmaß durchgeführt werden.

Weiterhin ist in der Fig. 5 noch angenommen, daß die Steuerschiene 16 in mehrere aufeinanderfolgende Abschnitte 16, 16a unterteilt ist. Die Abschnitte weisen unterschiedliche Lagen der Steuerschiene 16 zur festgelegten Kluppenbahn auf und bewirken somit in den Abschnitten auch unterschiedliche Abstände zwischen den aufeinanderfolgenden Spannkluppen. Auf diese Weise wird abschnittsweise ein unterschiedliches Längsreckverhältnis oder Längsschrumpfverhältnis erreicht, wobei das Reckverhältnis an sich zwar verhältnismäßig gering ist, sich aber andererseits für den Schrumpfvorgang sehr fein einstellen läßt. Der Übergang zwischen aneinandergrenzenden Steuerschienenabschnitten 16 und 16a erfolgt nicht ruckartig durch eine Knickstelle, sondern allmählich z.B. über ein zwischengefügtes Übergangsstück 18, das in analoger Weise zu den bekannten oben benannten Führungsschienen 14 für die Laufrollen der Spannkluppen biegsam ausgebildet ist.

Obenstehend sind nur Maßnahmen für die Steuerung der Abstände zwischen zwei aufeinanderfolgenden Spannkluppen und somit zur Durchführung einer Behandlung in Längsrichtung beschrieben. Auf ein simultanes, also gleichzeitig durchgeführtes Querrecken braucht nicht näher eingegangen zu werden, da es in üblicher Weise durch divergierend verlaufende Kluppenkettenbahnen erfolgt.

## Patentansprüche

1. Vorrichtung zur simultanen biaxialen Behandlung von Folienbahnen mit an den beiden Rändern einer Folienbahn in Führungsbahnen endlos umlaufenden und mit Klemmteilen zum Einspannen der Folienbahnränder versehenen Spannmitteln mit Rollenlagerung, wobei der Abstand zwischen jeweils zwei benachbarten Spannmitteln von außen durch Steuerteile beeinflußbar ist, und die Spannmittel untereinander durch ein erstes und ein zweites Kettenglied eines oberen und unteren Kettenstranges (K1,K2) verbunden sind und daß jedes betreffende Kettenglied mit seinem einen Ende drehbeweglich an einer von zwei festen Gelenkstellen des Spannmittels angelenkt ist, **dadurch gekennzeichnet,** daß die Kettenglieder (7,8) mit ihrem anderen Ende an einem gemeinsamen achsparallel zu den festen Gelenkstellen (3a,3b) verlaufenden Gelenkbolzen (10) angelenkt sind und wenigstens eines der Kettenglieder (7,8) als Winkelhebel ausgebildet ist, dessen Arm (9) achsparallel zum Gelenkbolzen (10) eine drehend gelagerte Führungsrolle (1) trägt, die mit dem Steuerteil (16) in Wirkverbindung bringbar ist.

2. Vorrichtung nach Anspruch 1, **dadurch gekennzeichnet,** daß der Gelenkbolzen (10) durchgehend die Kettenglieder (7,8) beider Kettenstränge (K1,K2) verbindet.

3. Vorrichtung nach Anspruch 1, **dadurch gekennzeichnet,** daß die Steuerteile (16) in Bezug auf die Auslenkung der Kettenglieder (7,8) auf einem Kettenbahnträger (12) mittels Schraube (17) einstellbar angeordnet sind.

4. Vorrichtung nach Anspruch 3, **dadurch gekennzeichnet,** daß die Steuerteile (16) in mehrere, gesondert einstellbare Abschnitte (16,16a) unterteilt sind.

5. Vorrichtung nach Anspruch 4, **dadurch gekennzeichnet,** daß die Steuerteilabschnitte (16,16a) durch biegsame Zwischenstücke (18) untereinander verbunden sind.

6. Vorrichtung nach einem der Ansprüche 1 bis 5, **dadurch gekennzeichnet,** daß die Spannmittel (20) in an sich bekannter Weise mittels die horizontalen Kräfte aufnehmender Laufrollen (2,4) und die vertikalen Kräfte aufnehmenden Stützrollen (5) in endlos durchlaufenden, hochkant angeordneten flexiblen Führungsschienen (14) geführt sind, wobei die Spannmittel (20) die Führungsschiene (14) von der Warenbahnseite her C-artig umfassen.

## Claims

1. Device for the simultaneous biaxial handling of foil strips with clamping means having roller bearings, which clamping means circulate continuously at the two edges of a foil strip in guide tracks and are provided with clamping parts for clamping the foil strip edges, wherein the distance between two adjacent clamping means in each case can be influenced from the exterior by control members, and the clamping means are connected to one another by a first and a second chain member of an upper and lower chain strand (K1, K2), and wherein each relevant chain member is rotatably linked at one of its ends at one of two fixed hinge points of the clamping means, characterised in that the other ends of the chain members (7, 8) are linked at a common hinge bolt (10) extending axially parallel to the fixed hinge points (3a, 3b), and at least one of the chain members (7, 8) is in the form of an angle lever of which the arm (9) supports, in a manner axially parallel to the hinge bolt (10), a rotatably mounted guide roller (1) which can be brought into operative connection with the control member (16).

2. Device according to Claim 1,
characterised in that the hinge bolt (10) connects the chain members (7, 8) of the two chain strands (K1, K2) by passing through them.

3. Device according to Claim 1,
characterised in that the control members (16) are disposed on a chain track carrier (12) such that they can be adjusted by means of a screw (17) with regard to the deflection of the chain members (7, 8).

4. Device according to Claim 3,
characterised in that the control members (16) are divided into a plurality of separately adjustable portions (16, 16a).

5. Device according to Claim 4,
characterised in that the control member portions (16, 16a) are connected to one another by flexible intermediate members (18).

6. Device according to any one of Claims 1 to 5, characterised in that the clamping means (20) are guided in a manner known per se by means of guide rollers (2, 4) absorbing the horizontal forces and support rollers (5) absorbing the vertical forces in continuous, flexible guide rails (14) disposed on edge, the clamping means (20) embracing the guide rail (14) in a C-shaped manner from the product strip side.

## Revendications

1. Appareil pour le traitement biaxial simultané de films ou bandes de feuilles continues, comportant sur les deux bords une bande de feuille continue tournant sans fin dans des organes de guidage et comportant des organes tendeurs munis de pièces de serrage pour pincer ou serrer les bords des feuilles continues, avec montage sur des roulements à rouleaux, la distance entre deux organes tendeurs chaque fois voisins pouvant être influencée de l'extérieur par des pièces de commande, et les organes tendeurs étant reliés les uns aux autres par un premier et un second chaînon d'un brin supérieur et d'un brin inférieur de chaîne (K1, K2) et chaque chaînon étant articulé par une de ses extrémités, de façon à pouvoir exécuter un mouvement de rotation, sur l'un des deux points fixes d'articulation de l'organe tendeur, appareil caractérisé en ce que les chaînons (7, 8) sont articulés par leur autre extrémité sur un axe (10) d'articulation s'étendant parallèlement à un axe commun sur les zones fixes d'articulation (3a, 3b) et en ce qu'au moins l'un des chaînons (7, 8) est conformé en un levier coudé, dont un bras (9), parallèle à l'axe (10) d'articulation, porte un rouleau ou galet de guidage (1) monté rotatif et qui peut être mis en liaison active avec l'élément (16) de commande.

2. Appareil selon la revendication 1, caractérisé en ce que l'axe (10) d'articulation relie entièrement les chaînons (7, 8) des deux brins (K1, K2) de chaîne.

3. Appareil selon la revendication 1, caractérisé en ce que les éléments de commande (16) sont disposés de manière à pouvoir être ajustés ou réglés à l'aide de vis (17) par rapport au sens de déploiement des chaînons (7, 8), sur un support (12) de bande de feuille continue.

4. Appareil selon la revendication 3, caractérisé en ce que les éléments de commande (16) sont subdivisés en plusieurs segments (16, 16a), réglables séparément.

5. Appareil selon la revendication 4, caractérisé en ce que les segments (16, 16a) de l'élément de commande sont reliés les uns aux autres par des pièces intermédiaires (18) flexibles.

6. Appareil selon l'une des revendications 1 à 5, caractérisé en ce que les organes tendeurs (20) sont guidés, de façon connue en soi, à l'aide de galets (2, 4) de roulement absorbant les forces horizontales et de galets (5) d'appui absorbant les forces verticales, dans des rails (14) de guidage, flexibles, disposés debout et tournant sans fin, les organes tendeurs (20) entourant, depuis le côté de la bande de matière et en étant en forme de C, les rails (14) de guidage.
